# EUROPÄISCHE PATENTSCHRIFT

(11) **EP 4 253 288 B1**
(45) Veröffentlichungstag und Bekanntmachung des Hinweises auf die Patenterteilung: **28.01.2026**
(21) Anmeldenummer: 23161802.6
(22) Anmeldetag: 14.03.2023
(51) Int. Cl.: B65G 47/91, B65G 54/02

(54) **PLANARANTRIEBSVORRICHTUNG UND VERFAHREN ZUM BETRIEB EINER PLANARANTRIEBSVORRICHTUNG**
PLANAR DRIVE DEVICE AND METHOD FOR OPERATING A PLANAR DRIVE DEVICE
DISPOSITIF D'ENTRAÎNEMENT PLANAIRE ET PROCÉDÉ DE FONCTIONNEMENT D'UN DISPOSITIF D'ENTRAÎNEMENT PLANAIRE

(30) Priorität: 29.03.2022 DE 102022107438
(43) Veröffentlichungstag der Anmeldung: 04.10.2023
(73) Patentinhaber: Syntegon Technology GmbH, 70372 Stuttgart (DE)
(72) Erfinder: Kleinert, Marcus, 74599 Wallhausen (DE); Eisenschmid, Ralph, 71672 Marbach am Neckar (DE)
(74) Vertreter: Novagraaf Group

(56) Entgegenhaltungen:
- WO-A1-2020/144592
- WO-A1-2020/243814
- DE-A1- 102013 202 674
- US-A1- 2020 030 995

## Beschreibung

Die Erfindung betrifft eine Planarantriebsvorrichtung mit den Merkmalen des Patentanspruchs 1.

Aus der WO 2020/144592 A1 und der DE 10 2013 202674 A1 sind Vorrichtungen zur Aufnahme und zum Transport von Objekten Die WO 2020/144592 A1 offenbart eine Linearmotorantriebsvorrichtung mit einer ersten Plattform und mit einer zweiten Plattform, welche elektromagnetisch mit einer Antriebsfläche koppelbar und voneinander unabhängig parallel zu der Antriebsfläche bewegbar sind, wobei die erste Plattform eine Arbeitsvorrichtung mit einem Arbeitswerkzeug umfasst, wobei die Linearmotorantriebsvorrichtung einen Speicherraum aufweist, mit einer ersten Speicherraumbegrenzung und mit einer zweiten Speicherraumbegrenzung, wobei die erste Speicherraumbegrenzung mit der ersten Plattform bewegungsgekoppelt und verbunden ist und dass die zweite Speicherraumbegrenzung mit der zweiten Plattform bewegungsgekoppelt und verbunden ist, sodass das Volumen des Speicherraums und ein Druckzustand eines in dem Speicherraum angeordneten Mediums durch eine Veränderung eines Abstands zwischen der ersten Plattform und der zweiten Plattform veränderbar sind, und dass der Speicherraum mit dem Arbeitswerkzeug medienwirksam gekoppelt ist.

Aus der WO 2018/176137 A1 und der WO 2020/243814 A1 sind Planarantriebsvorrichtungen mit elektromagnetisch gekoppelten Plattformen bekannt. Derartige Plattformen können beispielsweise als einfache und flexible Transportkörper für den Transport unterschiedlicher Transportgüter eingesetzt werden und/oder Arbeitsvorrichtungen mit einem Arbeitswerkzeug aufweisen.

Hiervon ausgehend liegt der Erfindung die Aufgabe zugrunde, eine Vorrichtung anzugeben, welche eine einfache Betätigung des Arbeitswerkzeugs ermöglicht.

Die Aufgabe wird durch eine Planarantriebsvorrichtung mit den Merkmalen des Patentanspruchs 1 gelöst.

Durch die Anordnung des Speicherraum an den Plattformen selbst wird eine autarke und ortsunabhängige Steuerung eines Druckzustands eines in dem Speicherraum angeordneten Mediums ermöglicht. Die Kopplung zwischen dem Speicherraum und dem Arbeitswerkzeug ermöglicht eine einfache und direkte Übertragung eines bestimmten Druckzustands des Mediums auf das Arbeitswerkzeug, und zwar an frei wählbaren Positionen der Antriebsfläche.

Da der Druckzustand durch eine Änderung des Abstands zwischen den Plattformen, also durch eine Relativbewegung zwischen den Plattformen, gesteuert wird, kann außerdem eine immanente Funktion der Vorrichtung - nämlich die Bewegbarkeit der Plattformen - genutzt werden, wodurch eine einfach aufgebaute Planarantriebsvorrichtung bereitgestellt wird.

Bei einer bevorzugten Ausführungsform ist das in dem Speicherraum angeordnete Medium ein Fluid, insbesondere ein Gas oder eine Flüssigkeit. Dies ermöglicht eine flexible und einfache Übertragung eines Druckzustands des Fluids auf das Arbeitswerkzeug, insbesondere unter Verwendung einer Fluidleitung, welche beispielsweise in Form eines Schlauchs oder einer Leitung vorgesehen ist.

Besonders bevorzugt geht eine Vergrößerung des Abstands zwischen der ersten Plattform und der zweiten Plattform mit einer Verringerung des Drucks des Mediums einher, insbesondere zur Herstellung eines Unterdrucks. Ein solcher Unterdruck ist an dem Arbeitswerkzeug nutzbar, beispielsweise für eine Aufnahme und ein Halten eines Objekts.

Ferner ist es bevorzugt, dass eine Verkleinerung des Abstands zwischen der ersten Plattform und der zweiten Plattform mit einer Erhöhung des Drucks des Mediums einhergeht, insbesondere zur Herstellung eines Überdrucks. Ein solcher Überdruck ist an dem Arbeitswerkzeug nutzbar, beispielsweise für ein Abstoßen eines Objekts von dem Arbeitswerkzeug.

Eine bevorzugte Ausführungsform sieht vor, dass der Speicherraum mittels eines Zylinders und mittels eines zu dem Zylinder relativbeweglichen Kolbens begrenzt ist. Die erste Speicherraumbegrenzung ist also beispielsweise durch einen Zylinder und die zweite Speicherraumbegrenzung durch einen Kolben gebildet; oder die zweite Speicherraumbegrenzung ist durch einen Zylinder und die erste Speicherraumbegrenzung durch einen Kolben gebildet. Dies ermöglicht es auf einfache Art und Weise, die Änderung des Abstands zwischen den Plattformen in eine Änderung eines Volumens des Speicherraums und in eine damit einhergehende Änderung des Druckzustands des in dem Speicherraum angeordneten Mediums zu übertragen. Insbesondere ist eine stufenlose Einstellung des Druckzustands möglich.

Alternativ ist es möglich, dass die erste Speicherraumbegrenzung und/oder die zweite Speicherraumbegrenzung einen Balg, insbesondere einen Faltenbalg, aufweist oder durch einen Balg gebildet ist, insbesondere durch einen Faltenbalg. Auf diese Weise kann mindestens eine verformbare Speicherraumbegrenzung bereitgestellt werden, bei deren Verformung sich das Speichervolumen des Speicherraums und somit der Druckzustand des in dem Speicherraum angeordneten Mediums ändert.

Des Weiteren ist es bevorzugt, wenn das Arbeitswerkzeug ein Ansaugelement ist oder ein solches aufweist. Das Ansaugelement ermöglicht eine Nutzung eines Unterdrucks bspw. zur Aufnahme und zum Halten eines Objekts an dem Ansaugelement. Die Abmessungen und die Geometrie des Ansaugelements sind vorzugsweise auf eine Oberfläche des aufzunehmenden und zu haltenden Objekts abgestimmt.

Die Erfindung betrifft ferner ein Verfahren zum Betrieb einer vorstehend erläuterten Planarantriebsvorrichtung. Es ist vorgesehen, dass das Arbeitswerkzeug ein Objekt durch Beaufschlagung des Speicherraums mit einem Unterdruck aufnimmt und/oder hält und/oder dass das Arbeitswerkzeug das Objekt durch Beaufschlagung des Speicherraums mit Überdruck abstößt, wobei eine Beaufschlagung des Speicherraums mit Unterdruck oder mit Überdruck durch eine Veränderung des Abstands zwischen der ersten Plattform und der zweiten Plattform erzeugt wird.

Dies ermöglicht eine autarke Aufnahme, das Halten, den Transport und das Abstoßen verschiedener Objekte an frei wählbaren Positionen der Antriebsfläche.

Insbesondere ist es bevorzugt, dass zwecks Anlage des Arbeitswerkzeugs an das Objekt die erste Plattform um eine zu der Antriebsfläche parallele Achse verkippt wird. Hierdurch wird die Flexibilität der Vorrichtung bezüglich der Größe der zu transportierenden Objekte erhöht. Zwar ist ein Abstand der Plattformen zu der Antriebsfläche in einem kleinen Bereich einstellbar; wird die Plattform allerdings verkippt, kann der der für das Arbeitswerkzeug nutzbare Bereich zur Herstellung einer Anlage an ein Objekt erheblich vergrößert werden.

Ferner ist es bevorzugt, dass das Objekt über die Antriebsfläche hinweg transportiert wird, wobei die Bewegungen der ersten Plattform und der zweiten Plattform derart aufeinander abgestimmt sind, dass sich der Abstand zwischen der ersten Plattform und der zweiten Plattform nicht verändert. Die Beibehaltung eines festen Abstands zwischen den Plattformen geht damit einer, dass sich der Druckzustand des Medium innerhalb des Speicherraums während des Transports nicht verändert und dass das Objekt zuverlässig an dem Arbeitswerkzeug gehalten bleibt.

Für die Erfassung des Druckzustands des in dem Speicherraum angeordneten Mediums ist es möglich, diesen auf der Grundlage des Abstands zwischen den beiden Plattformen zu berechnen.

Es ist zusätzlich oder alternativ hierzu auch möglich, den Druckzustand des in dem Speicherraum angeordneten Mediums durch mindestens einen Sensor zu erfassen.

Zur Erfassung des Druckzustands des in dem Speicherraum angeordneten Mediumsist erfindungsgemäß vorgesehen, dass die elektromagnetische Kopplung mindestens einer der beiden Plattformen mit der Antriebsfläche kraftgesteuert ist.

Eine kraftgesteuerte Bewegung bietet bspw. die Möglichkeit der Überwachung einer Funktionsfähigkeit des Speicherraums und der medienwirksamen Kopplung mit dem Arbeitswerkzeug. Beispielsweise korreliert im Funktionsfall eine konstante Antriebskraft unter Beibehaltung eines Abstands der Plattformen mit einem konstanten Druck des in dem Speicherraum angeordneten Mediums. Im Falle einer Leckage und einem unter Überdruck stehenden Medium ist für eine konstante Antriebskraft eine Verkleinerung des Abstands der Plattformen erfassbar. Im Falle einer Leckage und einem unter Unterdruck stehenden Medium ist für eine konstante Antriebskraft eine Vergrößerung des Abstands der Plattformen erfassbar.

Eine kraftgesteuerte Bewegung bietet außerdem die Möglichkeit, die Funktionsfähigkeit des Arbeitswerkzeugs zu überwachen. Beispielsweise geht eine Aufnahme eines Objekts mit einem Ansaugelement mit dem Aufbau eines Unterdrucks in dem Speicherraum einher, wobei für den Aufbau dieses Unterdrucks eine erhöhte Antriebskraft für eine Bewegung der zweiten Plattform erforderlich ist. Kann eine solche erhöhte Antriebskraft während der Bewegung der zweiten Plattform nicht oder nur kurzzeitig festgestellt werden, bedeutet dies, dass ein Unterdruck nicht oder nur kurzzeitig aufgebaut werden kann, und dass ein Objekt nicht oder nur kurzzeitig aufgenommen wurde. In diesem Fall kann der Aufnahmevorgang wiederholt werden, bis eine dauerhaft erhöhte Antriebskraft erfasst wird, welche mit einer dauerhaften Aufnahme des Objekts korreliert.

Weitere Merkmale und Vorteile der Erfindung sind Gegenstand der nachfolgenden Beschreibung und der zeichnerischen Darstellung einer Ausführungsform.

In der Zeichnung zeigt
- Fig. 1: eine Seitenansicht einer Ausführungsform einer Planarantriebsvorrichtung mit einer ersten und mit einer zweiten Plattform;
- Fig. 2: eine Seitenansicht der Vorrichtung gemäß Fig. 1 mit einem vergrößerten Abstand zwischen den Plattformen;
- Fig. 3: eine Seitenansicht der Vorrichtung gemäß Fig. 1 mit einem von einem Arbeitswerkzeug aufzunehmenden Objekt;
- Fig. 4: eine Seitenansicht der Vorrichtung gemäß Fig. 1 bei Anlage des Arbeitswerkzeugs an das Objekt;
- Fig. 5: eine Seitenansicht der Vorrichtung gemäß Fig. 1 mit von dem Arbeitswerkzeug aufgenommenen Objekt;
- Fig. 6: eine Seitenansicht der Vorrichtung gemäß Fig. 1 während eines Transports des Objekts; und
- Fig. 7: eine Seitenansicht der Vorrichtung gemäß Fig. 1 nach Abstoß des Objekts von dem Arbeitswerkzeug.

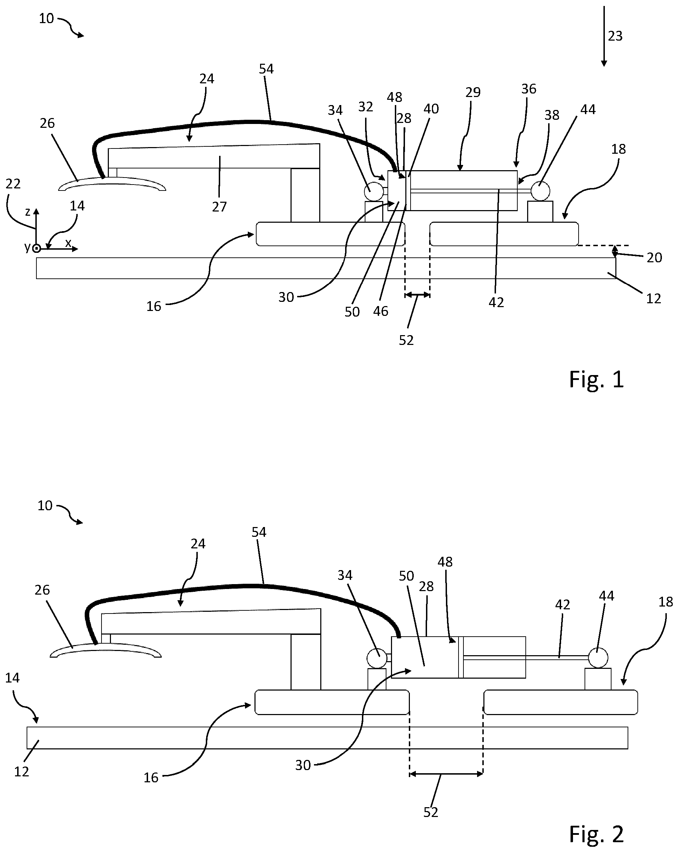

Eine Planarantriebsvorrichtung ist in der Zeichnung insgesamt mit dem Bezugszeichen 10 bezeichnet. Die Planarantriebsvorrichtung umfasst eine Antriebsfläche 12, die eine gerade x-y-Ebene 14 definiert, in welcher eine erste Plattform 16 und eine zweite Plattform 18 angeordnet sind, vergleiche Figur 1.

Die Plattformen 16, 18 sind elektromagnetisch mit der Antriebsfläche 12 gekoppelt und auf der Antriebsfläche 12 unabhängig voneinander bewegbar antreibbar. Ein Abstand 20 der Plattformen 16, 18 zu der Antriebsfläche 12 ist verstellbar, sodass die Plattformen 16, 18 frei in einem Raum positionierbar sind, welcher durch die x-y-Ebene 14 und einer dazu senkrechten z-Achse 22 definiert ist.

Die Antriebsfläche 12 kann relativ zu der Schwerkraftrichtung 23 parallel, senkrecht oder geneigt sein.

Die erste Plattform 16 umfasst eine Arbeitsvorrichtung 24 mit einem Arbeitswerkzeug 26, bspw. einer Ansaugeinrichtung. Die Arbeitsvorrichtung 24 ist beispielsweise an einem Ausleger 27 der Plattform 16 gehalten.

Ferner ist an der ersten Plattform 16 eine erste Begrenzung 28 eines Speicherraums 30 angeordnet. Die erste Begrenzung 28 ist durch einen Zylinder 29 gebildet, der vorzugsweise an einem ersten Ende 32 mit der Plattform 16 verbunden ist, entweder unbewegbar oder bewegbar, beispielsweise unter Verwendung eines Gelenks 34. An einem zweiten Ende 36 weist der Zylinder 29 eine Öffnung 38 auf.

In einem durch den Zylinder 29 begrenzten Innenraum ist ein Kolben 40 angeordnet, welcher mit einer Kolbenstange 42 verbunden ist. Die Kolbenstange 42 durchtritt die Öffnung 38 der ersten Begrenzung 28 und ist mit der zweiten Plattform 18 verbunden, entweder unbewegbar oder bewegbar, beispielsweise unter Verwendung eines zweiten Gelenks 34. Der Kolben 40 ist dadurch gemeinsam mit der zweiten Plattform 18 insbesondere relativ zu der ersten Begrenzung 28 bewegbar.

Eine der Kolbenstange 42 abgewandte Außenseite 46 des Kolbens 40 bildet eine zweite Begrenzung 48 des Speicherraums 30. In dem Speicherraum 30 ist ein Medium 50, bspw. ein Gas oder eine Flüssigkeit, angeordnet. Die relative Position der ersten Begrenzung 28 zu der zweiten Begrenzung 48 definiert dabei ein Volumen des Speicherraums 30 und damit einen Druckzustand des Mediums 50.

Da die erste Begrenzung 28 mit der ersten Plattform 16 und die zweite Begrenzung 48 mit der zweiten Plattform 18 verbunden ist, ist das Volumen des Speicherraums 30 und damit der Druckzustand des Mediums 50 durch Veränderung eines Abstands 52 zwischen der ersten Plattform 16 und der zweiten Plattform 18 einstellbar.

Der Speicherraum 30 ist mit dem Arbeitswerkzeug 26 der Arbeitsvorrichtung 24 über ein Verbindungselement 54, bspw. einen Schlauch oder eine Leitung, mediengekoppelt und kann dadurch mit dem Druckzustand des Mediums 50 beaufschlagt werden.

Beispielsweise führt eine Vergrößerung des Abstands 52 zur Erzeugung eines Unterdrucks in dem Speicherraum 30, welcher auf das Arbeitswerkzeug 26 übertragen wird (vgl. Fig. 2). Es ist aber auch möglich, durch eine Verkleinerung des Abstandes 52 einen Überdruck zu erzeugen und das Arbeitswerkzeug 26 mit Überdruck zu beaufschlagen.

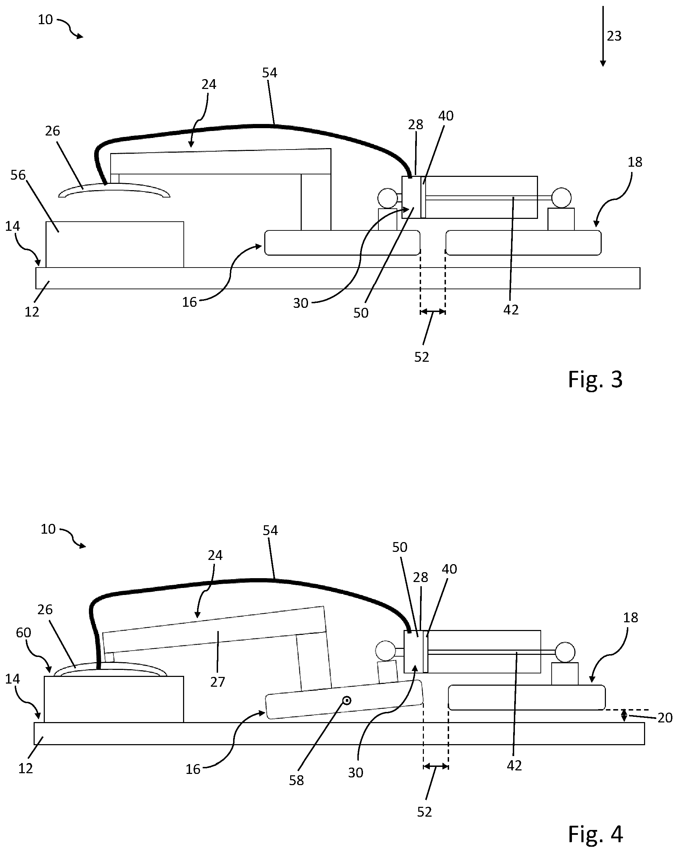

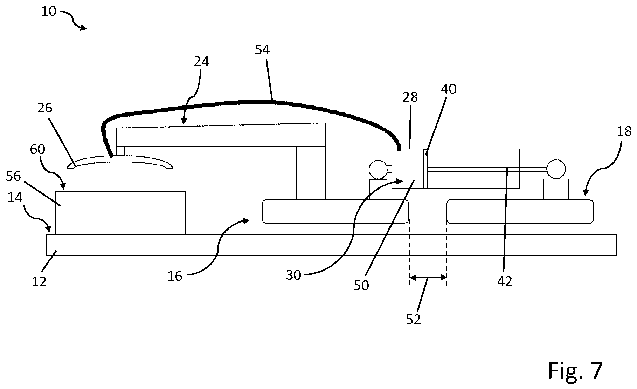

Die Figuren 3 bis 7 zeigen ein Verfahren zum Betrieb der Planarantriebsvorrichtung 10, wobei ein Objekt 56 aufgenommen, gehalten, transportiert und abgestoßen wird. Das Objekt 56 ist dabei auf der Antriebsfläche 12 angeordnet; es ist aber auch denkbar, das Objekt 56 aus einem Bereich außerhalb der Antriebsfläche 12 aufzunehmen, beispielsweise von einem zusätzlich bereitgestellten Träger (in der Zeichnung nicht dargestellt).

In einem ersten Schritt werden die Plattformen 16, 18 so positioniert, dass das Arbeitswerkzeug 26 der Arbeitsvorrichtung 24 in Schwerkraftrichtung 23 oberhalb des Objekts 56 angeordnet ist, vergleiche Figur 3. Der Abstand 52 zwischen den Plattformen 16, 18 definiert dabei einen Ausgangsdruckzustand des Mediums 50.

Die Anlage des Arbeitswerkzeugs 26 an das Objekt 56 erfolgt durch ein Verkippen der ersten Plattform 16 um eine zu der Antriebsfläche parallele Kippachse 58 (vgl. Fig. 4, wobei die Hubbewegung des Arbeitswerkzeugs 26 der Länge des Auslegers 27 entsprechend vergrößert ist) und/oder durch eine Veränderung des Abstands 20 zwischen der Antriebsfläche 12 und der ersten Plattform 16. Der parallel zu der x-y-Ebene 14 gemessene Abstand 52 zwischen der ersten Plattform 16 und der zweiten Plattform 18 ändert sich dabei nicht. Die Anlage des Arbeitswerkzeugs 26 ist abgeschlossen, wenn ein Kontakt zwischen dem Arbeitswerkzeug 26 und einer Oberfläche 60 des Objekts 56 hergestellt ist, vgl. Fig. 4.

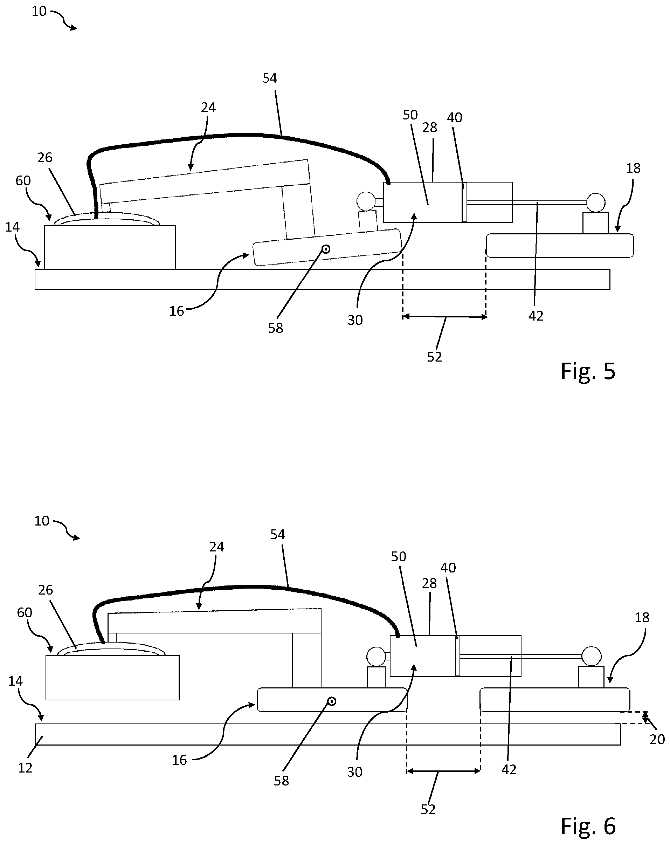

Wird der Abstand 52 zwischen der ersten Plattform 16 und der zweiten Plattform 18 vergrößert, beispielsweise indem die zweite Plattform 18 so angetrieben wird, dass sie sich von der ersten Plattform 16 weiter entfernt (vgl. Fig. 5), vergrößert sich auch das Volumen des Speicherraums 30. Auf diese Weise wird der Speicherraum 30 mit Unterdruck beaufschlagt. Der Unterdruck wird durch das Medium 50 über das Verbindungselement 54 auf das Arbeitswerkzeug 26 übertragen, wodurch das Objekt 56 an das Arbeitswerkzeug 26 angesaugt und dort gehalten wird.

Ausgehend von diesem Zustand wird das Objekt 56 von der Antriebsfläche 12 angehoben, indem die erste Plattform 16 um die Achse 58 zurückkippt (vgl. Fig. 6) und/oder indem der Abstand 20 zwischen der ersten Plattform 16 und der Antriebsfläche 12 vergrößert wird. Das Objekt 56 kann so zu frei wählbaren Positionen der Antriebsfläche 12 transportiert werden. Dabei sind insbesondere die Bewegung der ersten Plattform 16 und die Bewegung der zweiten Plattform 18 aufeinander abgestimmt, sodass sich der Abstand 52 zwischen den Plattformen 16, 18 während des Transports des Objekts 56 nicht ändert, wodurch der Druckzustand des Mediums 50 in dem Speicherraum 30 konstant gehalten wird.

Um das Objekt 56 von dem Arbeitswerkzeug 26 zu entfernen, wird der Abstand 52 zwischen der ersten Plattform 16 und der zweiten Plattform 18 wieder verkleinert, beispielsweise bis der Ausgangsdruckzustand erreicht ist und sich das Objekt 56 von dem Arbeitswerkzeug 24 löst. Oder es wird ein kleinerer Abstand 52 eingestellt, wodurch der Speicherraum 30 und das Arbeitswerkzeug 26 mit einem Überdruck beaufschlagt werden. Hierdurch wird das Objekt 56 von dem Arbeitswerkzeug 26 aktiv abgestoßen.

Es ist denkbar, dass das Objekt 56 auf eine weitere (nicht dargestellte) Plattform, auf die Antriebsfläche 12 oder in einem Bereich außerhalb der Antriebsfläche 12 abgelegt wird, beispielsweise auf einen separat bereitgestellten Träger.

## Patentansprüche

1. Planarantriebsvorrichtung (10) mit einer ersten Plattform (16) und mit einer zweiten Plattform (18), welche elektromagnetisch mit einer Antriebsfläche (12) koppelbar und voneinander unabhängig parallel zu der Antriebsfläche (12) bewegbar sind, wobei die erste Plattform (16) eine Arbeitsvorrichtung (24) mit einem Arbeitswerkzeug (26) umfasst, wobei die Planarantriebsvorrichtung (10) einen Speicherraum (30) aufweist, mit einer ersten Speicherraumbegrenzung (28) und mit einer zweiten Speicherraumbegrenzung (48), wobei die erste Speicherraumbegrenzung (28) mit der ersten Plattform (16) bewegungsgekoppelt und verbunden ist und dass die zweite Speicherraumbegrenzung (48) mit der zweiten Plattform (18) bewegungsgekoppelt und verbunden ist, sodass das Volumen des Speicherraums (30) und ein Druckzustand eines in dem Speicherraum (30) angeordneten Mediums (50) durch eine Veränderung eines Abstands (52) zwischen der ersten Plattform (16) und der zweiten Plattform (18) veränderbar sind, und dass der Speicherraum (30) mit dem Arbeitswerkzeug (26) medienwirksam gekoppelt ist und dass zur Erfassung des Druckzustands des in dem Speicherraum (30) angeordneten Mediums (50) die elektromagnetische Kopplung mindestens einer der beiden Plattformen (16, 18) mit der Antriebsfläche (12) kraftgesteuert ist.

2. Planarantriebsvorrichtung (10) nach Anspruch 1, wobei das Medium (50) ein Fluid, insbesondere ein Gas oder eine Flüssigkeit ist.

3. Planarantriebsvorrichtung (10) nach einem der vorstehenden Ansprüche, wobei eine Vergrößerung des Abstands (52) zwischen der ersten Plattform (16) und der zweiten Plattform (18) mit einer Verringerung des Drucks des Mediums (50) einhergeht, insbesondere zur Herstellung eines Unterdrucks.

4. Planarantriebsvorrichtung (10) nach einem der vorstehenden Ansprüche, wobei eine Verkleinerung des Abstands (52) zwischen der ersten Plattform (16) und der zweiten Plattform (18) mit einer Erhöhung des Drucks des Mediums einhergeht, insbesondere zur Herstellung eines Überdrucks.

5. Planarantriebsvorrichtung (10) nach einem der vorstehenden Ansprüche, wobei der Speicherraum (30) mittels eines Zylinders (29) und mittels eines zu dem Zylinder (29) relativbeweglichen Kolbens (40) begrenzt ist.

6. Planarantriebsvorrichtung (10) nach einem der Ansprüche 1 bis 4, wobei die erste Speicherraumbegrenzung (28) und/oder die zweite Speicherraumbegrenzung (48) einen Balg, insbesondere einen Faltenbalg, aufweist oder durch einen Balg gebildet ist, insbesondere durch einen Faltenbalg.

7. Planarantriebsvorrichtung (10) nach einem der vorstehenden Ansprüche, wobei das Arbeitswerkzeug (26) ein Ansaugelement ist oder ein Ansaugelement aufweist.

8. Verfahren zum Betrieb einer Planarantriebsvorrichtung (10) nach Anspruch 7, wobei das Arbeitswerkzeug (26) ein Objekt (56) durch Beaufschlagung des Speicherraums (30) mit einem Unterdruck aufnimmt und/oder hält und/oder dass das Arbeitswerkzeug (26) das Objekt (56) durch Beaufschlagung des Speicherraums (30) mit Überdruck abstößt, wobei eine Beaufschlagung des Speicherraums (30) mit Unterdruck oder mit Überdruck durch eine Veränderung des Abstands (52) zwischen der ersten Plattform (16) und der zweiten Plattform (18) erzeugt wird.

9. Verfahren nach Anspruch 8, wobei zwecks Anlage des Arbeitswerkzeugs (26) an das Objekt (56) die erste Plattform (16) um eine zu der Antriebsfläche (12) parallele Achse (58) verkippt wird.

10. Verfahren nach Anspruch 8 oder 9, wobei das Objekt (56) über die Antriebsfläche (12) hinweg transportiert wird, wobei die Bewegungen der ersten Plattform (16) und der zweiten Plattform (18) derart aufeinander abgestimmt sind, dass sich der Abstand (52) zwischen der ersten Plattform (16) und der zweiten Plattform (18) nicht verändert.

## Claims

1. Planar drive device (10) comprising a first platform (16) and a second platform (18), which platforms can be electromagnetically coupled to a drive surface (12) and can be moved, independently of one another, in parallel with the drive surface (12), wherein the first platform (16) has a working device (24) which has a work tool (26), wherein the planar drive device (10) comprises a storage space (30) which has a first storage space boundary (28) and a second storage space boundary (48), wherein the first storage space boundary (28) is movement-coupled and connected to the first platform (16), and that the second storage space boundary (48) is movement-coupled and connected to the second platform (18), such that the volume of the storage space (30) and a pressure state of a medium (50) arranged in the storage space (30) can be changed by changing a distance (52) between the first platform (16) and the second platform (18), and that the storage space (30) is coupled to the work tool (26) in a media-effective manner, and that the electromagnetic coupling of at least one of the two platforms (16, 18) to the drive surface (12) is force-controlled in order to detect the pressure state of the medium (50) arranged in the storage space (30).

2. Planar drive device (10) according to claim 1, wherein the medium (50) is a fluid, in particular a gas or a liquid.

3. Planar drive device (10) according to either of the preceding claims, wherein an increase in the distance (52) between the first platform (16) and the second platform (18) is accompanied by a reduction in the pressure of the medium (50), in particular for producing a negative pressure.

4. Planar drive device (10) according to any of the preceding claims, wherein a reduction in the distance (52) between the first platform (16) and the second platform (18) is accompanied by an increase in the pressure of the medium, in particular for producing a positive pressure.

5. Planar drive device (10) according to any of the preceding claims, wherein the storage space (30) is delimited by means of a cylinder (29) and by means of a piston (40) which is movable relative to the cylinder (29).

6. Planar drive device (10) according to any of claims 1 to 4, wherein the first storage space boundary (28) and/or the second storage space boundary (48) has a bellows, in particular a folding bellows, or is formed by a bellows, in particular by a folding bellows.

7. Planar drive device (10) according to any of the preceding claims, wherein the work tool (26) is a suction element or has a suction element.

8. Method for operating a planar drive device (10) according to claim 7, wherein the work tool (26) picks up and/or holds an object (56) by applying a negative pressure to the storage space (30), and/or that the work tool (26) repels the object (56) by applying positive pressure to the storage space (30), wherein an application of negative pressure or positive pressure to the storage space (30) is generated by changing the distance (52) between the first platform (16) and the second platform (18).

9. Method according to claim 8, wherein, in order to place the work tool (26) against the object (56), the first platform (16) is tilted about an axis (58) which is parallel to the drive surface (12).

10. Method according to claim 8 or 9, wherein the object (56) is transported over the drive surface (12), wherein the movements of the first platform (16) and the second platform (18) are coordinated with one another such that the distance (52) between the first platform (16) and the second platform (18) does not change.

## Revendications

1. Dispositif d'entraînement planaire (10) comportant une première plateforme (16) et une seconde plateforme (18), lesquelles peuvent être accouplées électromagnétiquement à une surface d'entraînement (12) et peuvent être déplacées indépendamment l'une de l'autre parallèlement à la surface d'entraînement (12), dans lequel la première plateforme (16) comprend un dispositif de travail (24) comportant un outil de travail (26), dans lequel le dispositif d'entraînement planaire (10) présente un espace de stockage (30) comportant une première limite d'espace de stockage (28) et une seconde limite d'espace de stockage (48), dans lequel la première limite d'espace de stockage (28) est accouplée en mouvement et reliée à la première plateforme (16) et la seconde limite d'espace de stockage (48) est accouplée en mouvement et reliée à la seconde plateforme (18), de sorte que le volume de l'espace de stockage (30) et un état de pression d'un milieu (50) disposé dans l'espace de stockage (30) peuvent être modifiés par une modification d'une distance (52) entre la première plateforme (16) et la seconde plateforme (18), et de sorte que l'espace de stockage (30) est accouplé à l'outil de travail (26) de manière à agir sur le milieu et que, pour la détection de l'état de pression du milieu (50) disposé dans l'espace de stockage (30), l'accouplement électromagnétique d'au moins l'une des deux plateformes (16, 18) à la surface d'entraînement (12) est commandé par la force.

2. Dispositif d'entraînement planaire (10) selon la revendication 1, dans lequel le milieu (50) est un fluide, en particulier un gaz ou un liquide.

3. Dispositif d'entraînement planaire (10) selon l'une des revendications précédentes, dans lequel
une augmentation de la distance (52) entre la première plateforme (16) et la seconde plateforme (18) s'accompagne d'une diminution de la pression du milieu (50), en particulier pour la création d'une dépression.

4. Dispositif d'entraînement planaire (10) selon l'une des revendications précédentes, dans lequel
une diminution de la distance (52) entre la première plateforme (16) et la seconde plateforme (18) s'accompagne d'une augmentation de la pression du milieu, en particulier pour la création d'une surpression.

5. Dispositif d'entraînement planaire (10) selon l'une des revendications précédentes, dans lequel l'espace de stockage (30) est délimité par le biais d'un cylindre (29) et par le biais d'un piston (40) mobile par rapport au cylindre (29).

6. Dispositif d'entraînement planaire (10) selon l'une des revendications 1 à 4, dans lequel la première délimitation d'espace de stockage (28) et/ou la seconde délimitation d'espace de stockage (48) présente un soufflet, en particulier un soufflet à plis, ou est formée par un soufflet, en particulier par un soufflet à plis.

7. Dispositif d'entraînement planaire (10) selon l'une des revendications précédentes, dans lequel l'outil de travail (26) est un élément d'aspiration ou présente un élément d'aspiration.

8. Procédé permettant de faire fonctionner un dispositif d'entraînement planaire (10) selon la revendication 7, dans lequel l'outil de travail (26) reçoit et/ou maintient un objet (56) en appliquant une dépression dans l'espace de stockage (30) et/ou l'outil de travail (26) repousse l'objet (56) en appliquant une surpression dans l'espace de stockage (30), dans lequel une application d'une dépression ou d'une surpression dans l'espace de stockage (30) est générée par une modification de la distance (52) entre la première plateforme (16) et la seconde plateforme (18).

9. Procédé selon la revendication 8, dans lequel, en vue du placement de l'outil de travail (26) sur l'objet (56), la première plateforme (16) est basculée autour d'un axe (58) parallèle à la surface d'entraînement (12).

10. Procédé selon la revendication 8 ou 9, dans lequel l'objet (56) est transporté au-dessus de la surface d'entraînement (12), dans lequel les mouvements de la première plateforme (16) et de la seconde plateforme (18) sont coordonnés de telle sorte que la distance (52) entre la première plateforme (16) et la seconde plateforme (18) ne change pas.
